(19) Europäisches Patentamt / European Patent Office / Office européen des brevets

(11) **EP 2 869 209 A1**

(12) **EUROPEAN PATENT APPLICATION**

(43) Date of publication:
**06.05.2015 Bulletin 2015/19**

(51) Int Cl.:
***G06F 17/10*** *(2006.01)*

(21) Application number: **13191674.4**

(22) Date of filing: **05.11.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Max-Planck-Gesellschaft zur Förderung der Wissenschaften e.V.**
**80539 München (DE)**

(72) Inventor: **Wegner, Anatol Eugen**
**04105 Leipzig (DE)**

(74) Representative: **Bach, Alexander**
**Mitscherlich PartmbB**
**Patent- und Rechtsanwälte**
**Sonnenstraße 33**
**80331 München (DE)**

(54) **Subgraph covers as representations for sparse graphs**

(57) A computer-implemented method for analyzing a system, the system being representable as a plurality of nodes connected by edges to form a graph, comprises the steps of: determining (120) a set of candidate graph patterns, determining (130) a subgraph cover of the graph, based on the set of candidate patterns and a cost function; and outputting (140) the subgraph cover and/or the set patterns used in the cover to a user, at least in part.

Fig. 1

```
       Begin

      Obtain        — 110
      Graph

      Select
      Candidate     — 120
      Motifs

      Determine
      Subgraph      — 130
      Cover

      Output
      Subgraph      — 140
      Cover

  100

       End
```

## Description

The present invention relates to a computer-implemented method and a device for analyzing a system, which is representable as a graph.

## Introduction

Many real world systems can be modeled as networks where nodes represent interacting elements and edges interactions between them. Much of network research has been focused on finding models and statistical measures of networks such as path length distributions, clustering, assortativity, power law degree distributions, community structures and network motifs that summarize key topological features of networks. One common feature of such measures is that these can be expressed in terms of frequencies of certain small subgraphs.

Network properties like clustering, assortativity and the degree distributions are interrelated through subgraph counts. Moreover the observation that certain subgraphs called motifs, appear more often in real networks than in their randomized counterparts with the same degree distribution indicates that other non-trivial connectivity patterns might play an important role in the structural organization and function of networks. Therefore, developing tools and measures not only for finding motifs but also explicitly identifying these in a given network is of great interest and crucial for incorporating the local subgraph structure into modeling.

## Prior Art

SUBDUE (Lawrence B. Holder, Diane J. Cook and Surnjani Djoko. Substructure discovery in the subdue system. In Proceedings of the Workshop on Knowledge Discovery in Databases, pages 169-180, 1994; Nikhil S. Ketkar, Lawrence B. Holder and Diane J. Cook. Subdue: Compression-based frequent pattern discovery in graph data. In proceedings of the 1st international workshop on open source data mining: frequent pattern mining implementations, pages 71-76, ACM, 2005) is a compression based frequent pattern discovery heuristic that applies the minimum description length (MDL) principle. It iteratively finds patterns in networks that when replaced by a single node compress the graph most efficiently. Due to computational intractability, the search for a smaller representation is only approximate, introducing a distortion or errors.

Patent application US 2004/0204925 A1 (Milo et al.) considers subgraph patterns or motifs that occur more frequently in a network compared to random networks with the same or similar characteristics. The analysis consists of counting the occurrence of all patterns of a certain size as induced subgraphs and comparing these with the counts in a randomized network, taken in most applications as the configuration model, i.e. the ensemble of all graphs having the same degree distribution. For the comparison, a large number of random networks with the same degree distribution are generated and using this sample the empirical mean and variance of subgraph counts is determined. In order to measure the significance of motifs, usually the z score is used which is the deviation from the mean, divided by the variance. In theory when detecting motifs of size n the subgraph counts of size n-1 are to be conserved in order to avoid that patterns are classified as motifs just because they contain a smaller overrepresented motif as a submotif.

For this end, a simulated annealing (SA) approach is suggested. However, there is no guarantee that a SA approach samples uniformly from the ensemble of graphs with the same degree distribution and same motif counts of size n-1. The use of SA therefore effectively results in an ill defined null model. Moreover in practice the conservation of smaller size motifs is omitted because it is not computationally feasible for motifs larger than 4. As a consequence larger motifs which contain overrepresented smaller motifs are automatically classified as motifs by existing methods. On the other hand small motifs which only occur as submotifs of larger motifs are also identified as motifs. The use of the z-score as a measure for statistical significance of motifs is also hard to justify since the distribution of subgraph frequencies might not be Gaussian.

Berg et al. [J. Berg and M. Lässig, Local graph alignment and motif search in biological networks, PNAS, 101 (41):14689-14694, 2004] consider statistically significant consensus patterns of graph alignments as network motifs. The statistical significance of consensus patterns is evaluated by comparing them with the consensus patterns of the configuration model with the same degree distribution. It is unclear whether counts of smaller motifs are to be conserved in the analysis.

The latter two methods only identify patterns that are overrepresented or unusual in the network compared to the null model, leaving the problems of explicitly identifying motifs/modules in the network open.

Recently several random graph models that incorporate subgraph structure have been proposed in the literature (B. Bollobas, S. Janson & O. Riordan, Sparse Random Graphs with Clustering, Random Structures and Algorithms 38 (2011), 269-323; Brian Karrer and MEJ Newman. Random graphs containing arbitrary distributions of subgraphs. Physical Review E, 82(6):066118, 2010). While the model of Bollobas et al. is based on explicitly adding random copies of certain subgraphs to the graph, the model by Karrer et al. is based on assigning a role degree sequence to the nodes of the network. The role degree of a node specifies the number and types of the subgraphs the node is a part of and of the role the node plays in these subgraphs. The model is then taken to be the ensemble of all graphs that have the same role degree sequence. Although these models incorporate subgraph structure in to network modeling until now it was unclear which subgraphs were to be used when matching networks with models. The method of the present invention can be used to address this problem.

It is therefore an object of the present invention to provide a more realistic method for analyzing a system that is efficient and provides relevant information.

**Short Summary of the invention**

This object is achieved by a method and a device according to the independent claims. Advantageous embodiments are defined in the subclaims.

According to the invention, motifs of a graph G are patterns of which instances yield an efficient representation of G, i.e. a representation which is essentially optimal with respect to a given cost function. At the core of the inventive approach lies the idea of using subgraph covers as representations of graphs. A subgraph cover is a set of subgraphs of a graph, such that each edge of the graph is contained in at least one subgraph in the cover. A subgraph cover is a representation of the graph in the sense that given a subgraph cover of G(E,V), the edge set E can be fully recovered. The analysis is based on finding an efficient representation of the graph rather than comparing the network with a null model. Consequently the inventive method also differs in its definition of network motifs from existing approaches to motif analysis.

The selection procedure aims at identifying both patterns and their instances in the network that yield an efficient representation of the network. The efficiency is measured by a cost function. Preferably and optionally, the cost function reflects the information required for the representation.

By considering motifs of different sizes simultaneously, the inventive method avoids misclassification of motifs that are due to dependencies between motifs. Moreover the method explicitly identifies motifs in the network making it possible for these to be studied in their context with respect to the rest of the network, rather than in isolation.

The subgraph covers are optionally and preferably selected according to the total information required to describe subgraph instances in the cover and the set of motifs used. The total information approach provides a solid theoretical foundation for the analysis.

The method can also be used for matching networks with generalized configuration models (Brian Karrer and MEJ Newman. Random graphs containing arbitrary distributions of subgraphs. Physical Review E, 82(6):066118, 2010; M.E.J. Newman. Random graphs with clustering. Physical review letters, 103(5):58701, 2009). Both these and graph models resulting from uniform subgraph covers are exactly solvable for many of their properties. Generalized configuration models can in addition to broad degree distributions also model the occurrences of densely connected subgraphs, including the high clustering observed in many real world networks.

Different embodiments of the invention shall now be explained in relation to the annexed drawing, in which

Fig. 1    shows a flowchart of a method according to an embodiment of the present invention;

Fig. 2    shows a flowchart of a method for determining a subgraph cover and a corresponding motif set according to an embodiment of the invention;

Fig. 3    shows a method for finding a most efficient motif and a corresponding optimal instance set according to an embodiment of the invention;

Fig. 4    shows a heuristic method for determining an optimal instance set, given a motif and a set of covered edges, according to an embodiment of the invention;

Fig. 5    shows an alternative heuristic method for determining an optimal instance set, given a motif and a set of covered edges, according to an alternative embodiment of the invention;

Fig. 6    shows the motifs of gene regulation transcription networks of E. Coli and S. Cerevisiae obtained using biconnected subgraphs up to size 5;

Fig. 7    shows a table of motifs of gene regulation transcription of E. Coli and S. Cerevisiae networks obtained using all connected motifs up to size 5;

Fig. 8    shows a table of motifs of electronic circuits (digital fractional multipliers) using all motifs up to size 5; and

Fig. 9     shows motifs of metabolic networks and their respective counts in the optimal cover found using biconnected subgraphs up to size 5; and

Fig. 10    shows a table of motifs of the network representing the Western States Power Grid of the United States found using biconnected subgraphs up to size 6.

**Detailed description**

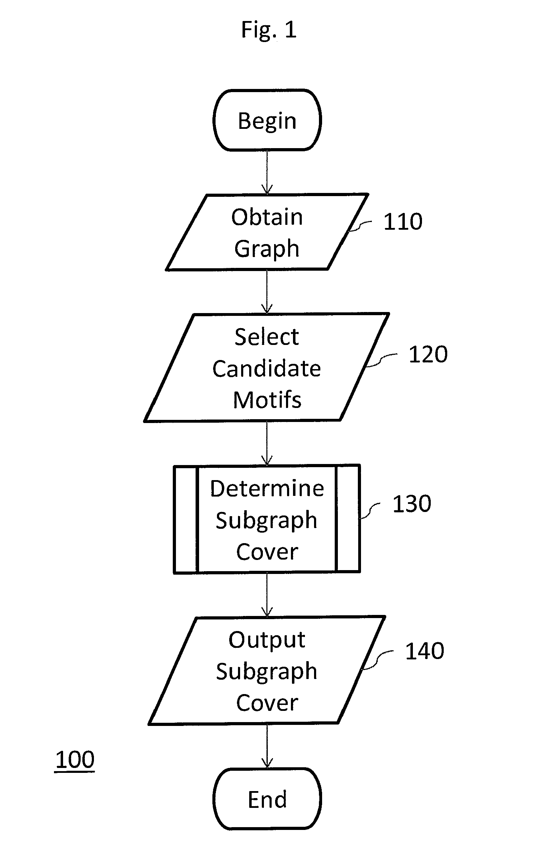

Figure 1 shows a flowchart of a method **100** according to an embodiment of the present invention.

In step **110,** a computer-readable representation of the system to be analyzed is obtained, either manually or automatically, in the form of a graph $G = G(E,V)$ comprising nodes or vertices V and edges E. Optionally, the graph can be represented by a connectivity matrix. The inventive method is preferably and optionally applied to sparse graphs. Most real world complex networks are sparse, i.e. ($|E(G)| = O(N)$), where $N = |V|$. The graph can represent interactions in a network of the domain to be studied, for example transcription factor proteins binding regulatory DNA regions of a gene to regulate the production rate of a protein, the synaptic connections between a set of neurons, feeding relationships between organisms, economic or social relations, power grids, traffic networks or electronic circuits.

The graph may be stored in a computer-readable memory, such as a database system or in a computer's main memory, depending on the size.

In step **120,** a set of candidate motifs for the analysis of the graph is determined.

A priori, there exist many possibilities of constructing a subgraph cover for a given graph. Examples of subgraph covers are the set of all edges of G and G itself. Other examples are the maximal clique and star covers which are the sets of all cliques/stars that are not subcliques/substars. The maximal star cover covers each edge twice, except isolated edges, and is closely related to the adjacency list representation of a graph. Similarly clique covers are closely related to bipartite representations.

In general it might be desirable to use the most general set of candidate patterns when finding optimal subgraph covers. However, no known polynomial time algorithm is known for determining whether two finite graphs are isomorphic. The same holds for finding the automorphism group of a finite graph. This might be a problem when one uses large patterns. Moreover, determining whether a graph contains a given graph as a subgraph is NP-complete. Therefore enumerating all isomorphisms from H to G is computationally expensive especially for large patterns. In addition, the number of non isomorphic graphs grows exponentially with size, limiting the size of the patterns that can be used. Finally, the number of connected subgraphs of a network increase drastically with the size of the subgraphs and the number of subgraph instances that have to be included in the analysis can become unmanageable. Consequently, in practice the set of candidate motifs of which the instances are to be included in the analysis has to restricted.

According to the invention, a set of candidate motifs representing subgraph patterns potentially occurring in the graph is used that is both relevant for the knowledge domain at hand and computationally feasible. For example, only subgraphs up to a certain size or from a particular class can be included in the analysis in practice. On the other hand one can also include obvious classes such as stars, complete graphs, complete bipartite graphs and cycles which are highly symmetric and dense since these are natural candidates for motifs to be in the optimal cover if they occur in the network.

If there exists prior knowledge about the structure of the graph to be analyzed this can be used to make an educated guess about which patterns might result in a better subgraph cover. For instance, if a graph represents a collaboration network, cliques and combinations thereof which represent collaborations, such as the common appearance in a movie or the publication of a mutually authored research article, are an obvious choice. When examining an electronic circuit, the patterns corresponding to various known subcomponents of the circuit should be included in the set of candidate patterns. Similarly, when the network represents a network of chemical agents and edges reactions among those patterns corresponding to various chemical reactions are an obvious choice. Finally, if the network at hand is known to have a broad degree distribution including star patterns in the set of candidate patterns might be a wise choice. Similarly if certain patterns are known to favor a certain type of dynamical behavior that is thought to be relevant to the network performing certain tasks such patterns and generalizations of these are obvious candidates for the pattern set.

Depending on the intended property of the final cover that is to be obtained some patterns might be more promising than others in obtaining a cover with desired property.

For instance, when the goal is to obtain a subgraph cover with minimal total information dense (that have a large number of edges compared to its size) and symmetric patterns are the most promising candidates. Similarly, if one intends to use the subgraph cover in order to determine a role degree sequence the set of motifs can be restricted to biconnected motifs because the occurrence of singly connected subgraphs can be accounted for by fixing the role degree sequence in these models.

In step **130,** the graph is processed in order to determine an efficient representation of the graph in terms of a subgraph cover, using the candidate motifs selected in previous step **120.** Essentially, this can be achieved by enumerating subgraph all possible subgraph covers that can be constructed using the subgraph instances of the candidate motifs and selecting the subgraph cover that has minimal cost.

Step 130 in general involves finding all or some instances of the candidate motif. There exist several efficient algorithms for finding subgraph instances, commonly also known as subgraph isomorphisms, e.g. the algorithm by Ullman (Ullmann, J. R., "An algorithm for subgraph isomorphism", Journal of the ACM 23 (1): 31-42, 1976).

As formulated the problem of finding a subgraph cover having minimal cost is a set covering problem. Where the set to be covered is the set of all edges of G and the subsets are the edge sets of the instances of the candidate motifs. Set covering problems are known to be NP-hard even in the case of linear cost functions. Non-linear problems are thought to be even harder to approximate. Consequently in most practical applications exact solutions are elusive and a heuristic has to be used.

The efficiency of a subgraph cover may be defined in terms of an entropy measure of the cover that represents the information required to specify the coordinates of the subgraphs in the cover. The entropy can be defined by embedding the subgraph cover into the uniform ensemble of all subgraph covers with the same motif counts.

The entropy or Shannon information of an ensemble E(R; pr) where R is the set of possible outcomes and their respective probabilities $p_r$, the entropy is defined as:

$$S = -K \sum_r p_r \log p_r \qquad (1)$$

When K=1 and log $\equiv$ log2 the entropy is measured in bits.

A graph m of size with automorphism group Aut(m) can be embedded into N vertices in

$$\frac{N!}{(N-m)! \, |Aut(M)|}$$

different ways, consequently the information required to specify $n_m$ such embeddings or subgraph instances is:

$$S(m, n_m) = \log \left( \frac{\frac{N!}{(N-|m|)! \, |Aut(m)|}}{n_m} \right) \qquad (2)$$

Generalizing the above expression, the entropy of a cover C with motif set M(C) and motif counts $n_m$ may be defined as the entropy of the uniform ensemble of all covers with motif counts $n_m$ :

$$S(C) = \sum_{m \in M(C)} S(m, n_m) \qquad (3)$$

which is essentially the amount of information required to specify the coordinates of the subgraphs in the cover, given the motifs and respective frequencies of the motifs occurring in the cover.

The terms in equation 3 can be approximated using Stirling's approximation.

In general dense, symmetric and frequent motifs produce covers with small entropy.

Given a graph it might not always be clear which subgraph cover is a better representation of it. Although the entropy can be used as such to compare subgraph covers, it might be desirable to also include the information required to describe the motifs occurring in the cover and their frequencies into such considerations. This can be achieved by defining an effective complexity $\varepsilon(C)$ of a cover. The effective complexity can be further used to define the total information of a cover which is the sum of the entropy and efficient complexity:

$$\sum(C) = \varepsilon(C) + S(C) \qquad\qquad (4)$$

The effective complexity is defined as the length of a concise description of an ensemble. In the case of subgraph covers, this is equivalent to the information required to describe the motifs used in the cover and their respective frequencies. Although it is desirable to use the length of the shortest of such descriptions corresponding to the algorithmic information content of the ensemble, the algorithmic information content is computer dependent and is known to be uncomputable. Therefore in practice it has to be substituted by the length of a practical encoding of the ensemble.

According to the invention, it is preferably assumed that the motifs and their frequencies are encoded independently resulting in an effective complexity term that is additive in the motifs. In a first embodiment, motifs are encoded using their edge lists of which the expected length is:

$$\varepsilon(m) = \log^*|m| + \log^* e(m) + S(|m|, e(m))$$

where log* is the iterated logarithm and $S(|m|, e(m))$ is the entropy ensemble of all graphs with the same node and edge counts as m.

According to a second embodiment, a predefined fixed encoding or catalog of codes for the candidate motifs is used to determine the effective complexity of motifs. In this case the each motif has a distinct code or index $I_m$ of which the length gives the effective complexity of the motif:

$$\varepsilon(m) = \text{Length}(I_m)$$

While the edge list representation is most suitable when considering general motifs such as all motifs up to a certain size. On the other hand if special classes of motifs such as cliques, stars or cycles of arbitrary size are used a catalog type encoding is more suitable. The resulting overall expression for the total information of a cover is:

$$\Sigma(C) = \log^* N + \sum_{m \in M(C)} [S(m, n_m) + \varepsilon(m) + \log^* n_m]$$

By considering both the random and rule based features of the cover the total information (Murray Gell-Mann and Seth Lloyd. Information measures, effective complexity, and total information. Complexity, 2(1):44{52, 1996) provides a framework for comparing subgraph covers: When comparing two subgraph covers the better cover is the one that minimizes the total information and then subject to this constraint minimizes the effective complexity. Together with additional constraints on computation time the framework provides a method for identifying regularities/models that 'best' describe a given entity which in many regards is independent of the observer.

According to the total information approach, the cover that gives an optimal description of the graph is the one that minimizes the total information. As a result, the motif set of G can be defined as the motif set of G's $\Sigma$ optimal subgraph cover: $M(C_\Sigma(G))$. $\varepsilon(C_\Sigma(G); n_m)$ can be interpreted as a measure of the complexity of G which actually is in correspondence with the subjective indicators that are generally used in networks such as the broadness of the degree distribution and/or clustering.

In step **140,** the subgraph cover and/or the corresponding motif set together with the frequencies of the motifs is output to a user, at least in part.

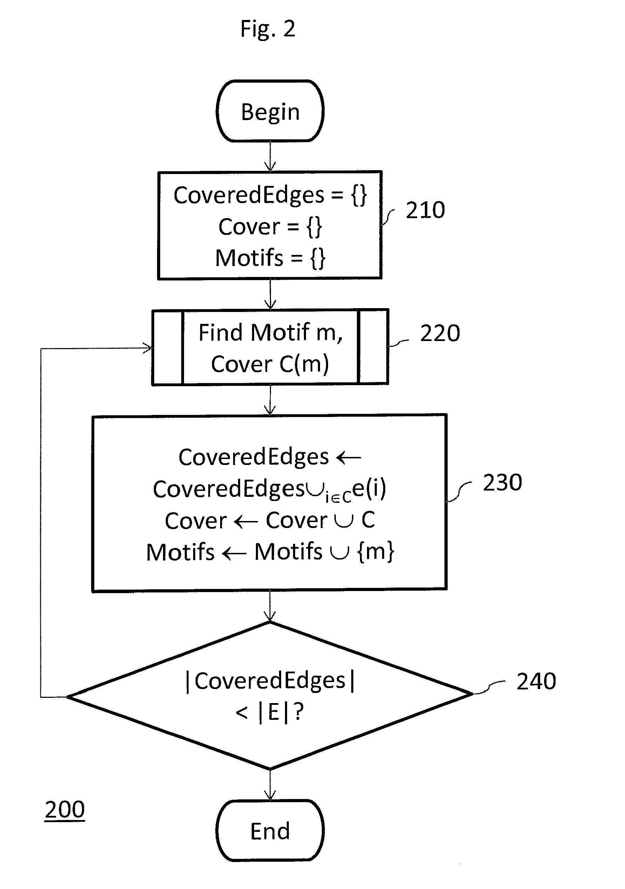

Figure 2 shows a flowchart of a method for determining a subgraph cover and a corresponding motif set according to an embodiment of the invention. The method takes a graph G(E,V) and a set of candidate motifs as input.

As mentioned before the problem of finding a subgraph cover with minimal total information is a nonlinear set covering problem and is NP-hard. Therefore in most applications one has to resort to heuristics. The heuristic proposed according to the method shown in figure 2 is based on the stepwise construction of a subgraph cover. At each step, the algorithm finds the motif that covers uncovered edges of G most efficiently in terms of total information required per edge.

In step **210,** the three basic variables, covered edges, cover and motifs are initialized to be empty. The set covered edges represent the edges of G that are already covered by the subgraph cover constructed by the inventive method.

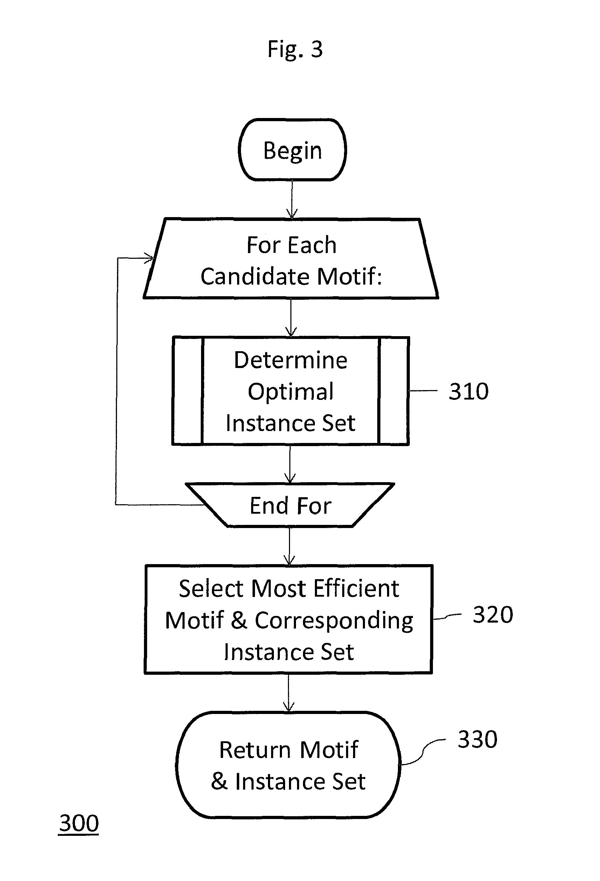

In step **220,** from the set of candidate motifs, the motif that covers the uncovered edges most efficiently and its corresponding optimal instance set are found using exhaustive enumeration or according to the procedure to be described in connection with figures 3,4and5.

Given a set of covered edges and a motif m, the efficiency of a set $C_m$ of m-subgraphs is given by the cost per uncovered edge the instances in the set contain. More specifically in the case of total information:

$$\sigma (m, CoveredEdges, C_m) =(S(N,n_m)+\varepsilon(m)+log^*n_m)/|Edges(C_m)-CoveredEdges|$$

where $n_m$ is the size of the set. The efficiency of a motif is then defined as the efficiency of its most efficient set of instances which we call an optimal instance set.

In step **230,** the optimal instance set of corresponding to the most efficient motif is included into the cover set and the set of covered edges is updated accordingly. The newly found motif m is added to the motif set.

In step **240,** it is checked whether all edges of the graph have already been covered. If not, the method branches back to step **220** and terminates otherwise with a complete cover and a set of corresponding motifs for the graph G.

Figure 3 shows a flowchart of a method for finding a motif according to an embodiment of the invention, given a set of candidate motifs.

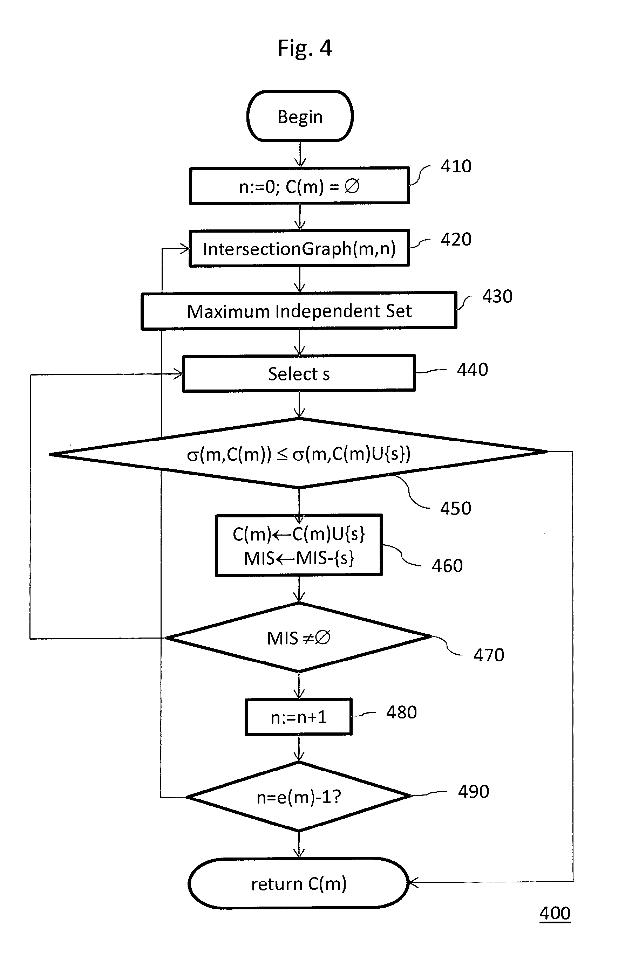

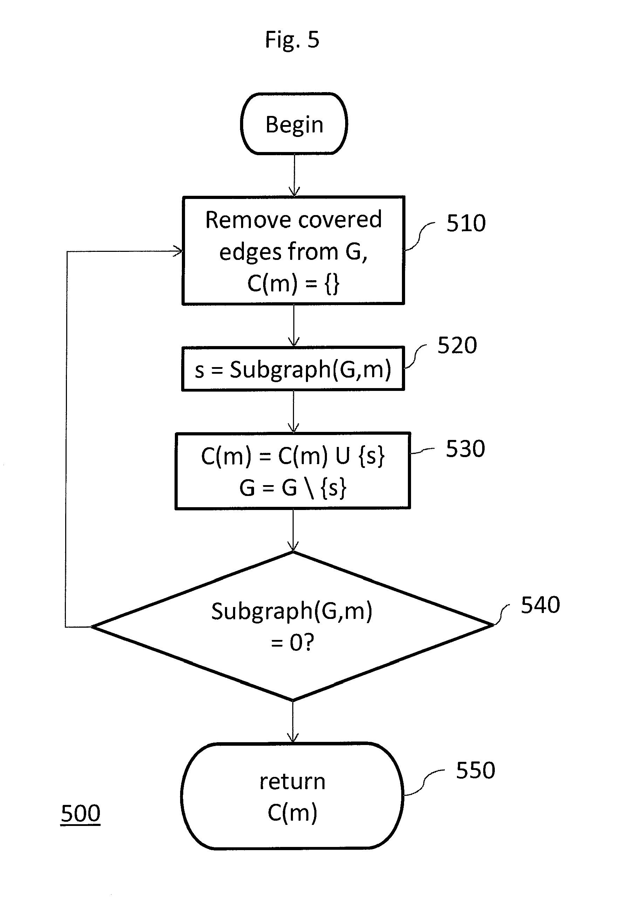

In step **310,** the method determines an optimal instance set for each candidate motif in the given candidate motif set. It is not uncommon that a graph contains a significant number of subgraph instances of a motif which strongly intersect each other. Therefore in most cases optimal instance sets cannot be determined exactly by brute force and a heuristic has to be used. Figure 4 and 5 describe such heuristics.

In step **320,** first for each motif m it is checked whether including its most efficient instance set in to the cover does not increase the overall total information of the cover. The total information of incomplete/partial covers is calculated by adding the edge subgraphs corresponding to the uncovered edges to the cover. From those motifs that do not increase the total information of the cover the motif that is most efficient is selected.

In step **330,** the selected motif and its optimal instance set is returned.

Figure 4 shows a flowchart of a method for constructing an optimal instance set fo0r a given motif m according to one embodiment of the invention.

In step **410,** parameter n is initialized to zero and the set of instances/cover set is initialized to be empty. The construction of the optimal instance set is achieved by successively constructing intersection graphs corresponding to instances containing n covered edges and finding maximum independent vertex sets of these graphs.

More particularly, an intersection graph is obtained in step **420,** whose nodes or vertices are those subgraph instances of motif m in G, having exactly n edges that are already covered. The intersection graph of m-subgraphs containing n covered edges is defined as follows: the vertices of the graph are all the m-subgraphs of G that contain n covered edges and there is an edge between two vertices whenever they have at least one uncovered edge in common.

In step **430,** a maximum independent vertex set of this intersection graph of m-subgraphs is obtained, that is the largest set of vertices of the intersection graph, such that no pair of vertices in the set are linked by an edge.

The reasoning behind the heuristic is that the larger the number of uncovered edges a subgraph contains the more efficient it is. Thus when constructing an optimal instance set, one starts with subgraphs that contain the largest number of uncovered edges. Moreover because these are the most efficient instances, one would like to add a maximal number of such m-subgraphs to the cover.

Finding a maximum independent set is known to be NP-complete therefore, it is preferable to use a heuristic algorithm, as described, for example, in Boppana et al. (Ravi Boppana , Magnús M. Halldórsson. Approximating maximum independent sets by excluding subgraphs. BIT Numerical Mathematics, 32(2):180-196, 1992).

In step **440,** a subgraph is randomly picked from the maximum independent set found in step **430** and included in the optimal instance set, if it does not decrease the efficiency of the optimal set so far constructed (steps **450, 460, 470),** until the maximum independent set is empty. Then the set of covered edges is updated and the procedure is repeated for n+1 until there remains no m-subgraph that increases the efficiency of the optimal instance set.

Finding the intersection graph at each step of the algorithm sometimes requires a large amount of computational resources since some subgraphs might occur in very large numbers and the intersection graphs of these become very large. For instance for graphs that have on the order of 1000 nodes some 5 node graphs appear hundreds of thousand or even million times. Moreover such high frequency subgraphs also intersect quite heavily thus their intersection graph can occupy a lot of memory. To overcome this, a lighter and faster version of the above algorithm uses maximal independent sets instead of maximum independent sets. Maximal independent vertex sets are independent sets that are not a subset of any other independent set. Finding a maximal independent set is in general easier that finding a maximum independent set.

Figure 5 shows a method for determining an optimal instance set, given a motif and a set of covered edges, according to an alternative embodiment of the invention.

In step **510** the covered edges are removed from G. In particular, a maximal independent set of instances of the motif is obtained by stepwise picking a random instance of motif in step **520,** adding the instance to the optimal instance set and then removing the edges of the obtained instance from G the graph in step **530** and then repeating the procedure until the graph contains no more copies of m in step **540.** The maximal independent set of subgraphs is then returned in step **550** to be used as a candidate for the optimal instance set. This algorithm has more variability in terms of the optimal instance set when compared to the maximum independent set heuristic.

The heuristic always produces non-intersecting subgraphs covers. On the other hand this heuristic does not require all subgraphs and their intersection graphs to be computed and stored in memory. This makes it much more suitable for larger networks and motifs when computational resources are limited.

The inventors applied the above algorithm to some real world networks of various kinds. Due to the limitation of computational resources, the size of the subgraphs used in the analysis was restricted to 5 in the directed and to 6 in the undirected case. Biconnected subgraph covers have also been considered in relation with the generalized configuration model. In the figures N stands for the number of nodes, E the number of edges, ERI for the total information of the edge cover and CoverI for the total information of the obtained cover. Informations are given in bits.

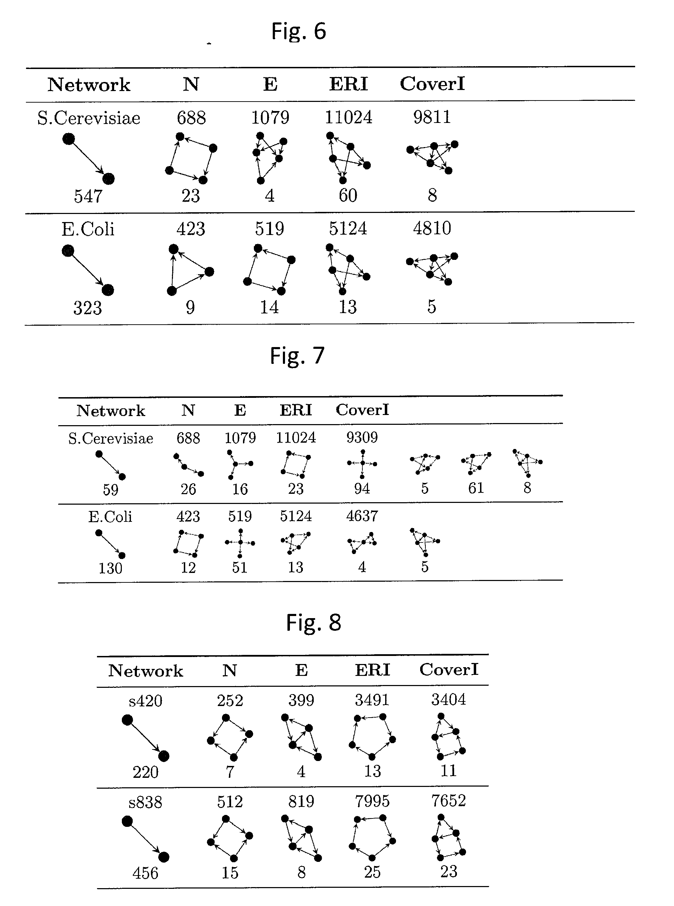

Figure 6 shows the motifs of gene regulation transcription networks of E. Coli (S. Shen-Orr, R. Milo, S. Mangan, U. Alon, Nature Genet. 31, 64, 2002) and S. Cerevisiae (R. Milo et al. Science 298, 824, 2002) obtained using biconnected subgraphs up to size 5. Figure 7 shows a table of motifs of the same gene regulation transcription networks obtained using all motifs up to size 5. Figure 8 shows a table of motifs of electronic circuits (digital fractional multipliers) using all motifs up to size 5 (R. Milo et al. Science 298, 824, 2002).

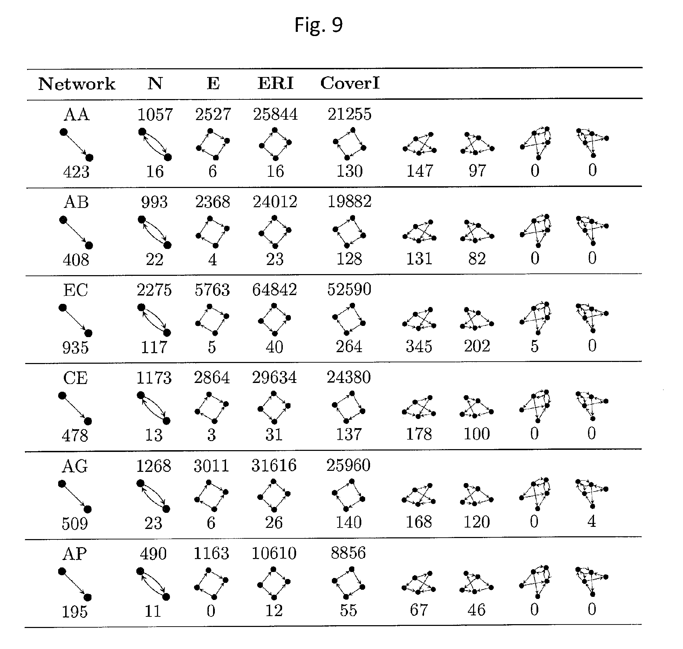

Figure 9 shows motifs of metabolic networks and their respective counts in the optimal cover found using biconnected subgraphs up to size 5. AA = Aquifex aeolicus(bacteria), AB = Actinobacillus actinomycetemcomitans (bacteria), EC = Escherichia coli (bacteria), CE = Caenorhabditis elegans (eukaryote), AP = Aeropyrum pernix(archea)(H. Jeong, B. Tombor, R. Albert, Z. N. Oltvai and A.-L. Barabási, Nature, 407, 651, 2000).The table shows all motifs that occur at least 4 times in any one of the covers. For each network at most 2 motifs are not shown in this table.

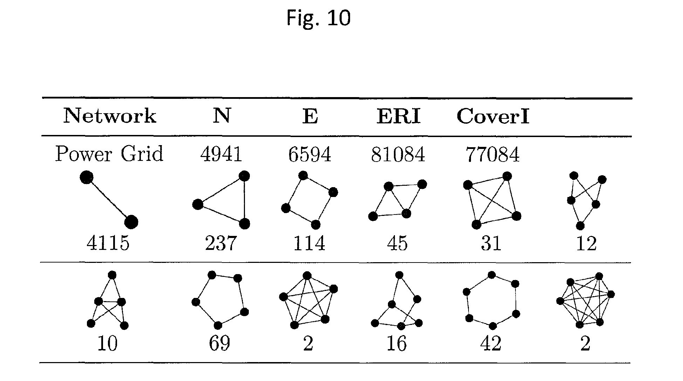

Figure 10 shows a table of motifs of the network representing the Western States Power Grid of the United States (D. J. Watts and S. H. Strogatz, Nature 393, 440-442, 1998) found using biconnected subgraphs up to size 6. When singly connected subgraphs are also considered one additional motif consisting of two triangles connected at one node is obtained.

All the covers were obtained using the maximal independent set heuristic and using the edge list representation in calculating the effective complexity. As previously mentioned, the use of the fast heuristic introduces some variability in the covers found the counts of usually vary no more than 10% and in very rare instances the algorithm can produce different motifs on different runs but these are in general motifs that do not occur more than few times in the cover. The above results show that the method finds nearly the exact same motifs for the networks that belong to the same class. This further supports that these motifs play an important role in the structural organization and functioning of real networks. The above results also show that subgraph covers can be used to obtain representations that are up to 20% shorter when compared to its edge list representation.

The method in general provides a consistent approach for the determination of the motif structure of networks.

An important aspect of the method is that the obtained subgraph covers can be used to assign a specific role degree sequence to the network. This allows clustering and more generally the obtained subgraph structure to be incorporated into models for the network. The resulting generalized configuration models can be solved exactly for many of their properties allowing the prediction of various network properties.

The subgraph cover obtained by the inventive method and resulting models can also be used to identify weakness/defects in a network topology and can be used as a basis for improving/strengthening/designing networks against failures/attacks by studying the topological, functional and dynamical robustness of the resulting models. For instance power supply networks, communication and computer networks.

The models can be used to improve the identification of missing links in noisy network data. Including motifs/clustering into missing link identification is crucial since most real networks are highly clustered that is links forming triangles and other motifs are more likely to appear in these networks. Missing link identification has a wide range of applications including biological and social networks.

Motifs can be incorporated into methods for detecting communities in networks. Communities/modules are expected to contain different motif distributions if they differ with respect to their internal organization and/or function.

The inventive method for also allows motifs to be studied in their context with respect to the rest of the network rather than isolation. This further allows a more detailed characterization of the role different nodes play in the overall organization of the network.

The method further enables a consistent determination of motifs of larger size and thus enables the evolution of network motifs in networks to be studied in more detail. Moreover motifs can be used to reverse engineer biological networks uncovering general/interspecies features and general design principles.

In general, any process that decreases the total information needed to describe a system increases one's ability to describe and control the system.

The method also results in a compressed representation of the network as an information optimal subgraph cover. The construction of an actual coding procedure/graph format is straightforward. Some network algorithms may directly be run on the representation without the need of decompression resulting in a decrease in computational resources/computation time needed. The resulting cover can also be compressed further by exploiting any existing correlations between the subgraphs in the cover.

The method may be used to identify motifs/modules in cellular/genetic networks that are pathologically altered in a dysfunctional or suboptimal state. For instance these might be motifs/modules in cellular/genetic networks that are pathologically altered in a disease state. Similarly the motif structure versus efficiency of networks can be analyzed in order to identify patterns of interconnections that promote efficiency.

The method can readily be extended to edge and/or vertex colored graphs, weighted graphs, graphs with parallel and self edges. Cost functions other than the total information can also be used. One such choice is to use the code length functions of a practical or theoretical encoding of the cover and its motif set in accordance with the minimum description length principle. Especially if the method is to be employed for compressing graph data by encoding the obtained subgraph cover. Linear cost functions are another class of possible cost functions, wherein every subgraph has fixed cost depending on some of its characteristics. It is also possible to conceive different specialized heuristics for finding subgraph covers depending on the structure of the candidate motif set and the cost function used.

**Claims**

1. Computer-implemented method for analyzing a system, the system being representable as a plurality of nodes connected by edges to form a graph, the method comprising the steps of

   - determining (120) a set of candidate graph patterns,
   - determining (130) a subgraph cover of the graph, based on the set of candidate patterns and a cost function;
   - outputting (140) the subgraph cover and/or the set patterns used in the cover to a user, at least in part.

2. The method of claim 1, wherein the cost is determined in terms of an information measure of the subgraph cover.

3. The method of claim 2, wherein the information of the cover is determined based on an entropy measure of the subgraph cover.

4. The method of claim 3, wherein the entropy measure of a subgraph cover is determined by the entropy of the uniform ensemble of all subgraph covers having the same subgraph counts.

5. The method of claim 4, wherein the cost function is further determined based on a measure of effective complexity corresponding to the information required to specify the subgraph patterns occurring in the cover and/or their respective frequencies, this information being measured by the length of an encoding of the set of patterns and their respective frequencies in the cover.

6. The method of claim 5, wherein the cost function is determined based on a combination of the entropy and the effective complexity of the subgraph cover.

7. The method of claim 6, wherein the effective complexity term is determined by independently encoding the subgraph patterns and their respective frequencies resulting in an expression that is additive in the patterns occurring in the subgraph cover.

8. The method of claim 7, wherein an effective complexity of a subgraph pattern is measured based on the length of an edge list representation of the subgraph.

9. The method of claim 7, wherein an effective complexity of a subgraph pattern is measured based on the length of a predefined fixed encoding/or catalog of the candidate subgraph patterns.

10. The method of claim 2, wherein the subgraph cover is constructed stepwise, wherein in each step comprises:

for each pattern in the candidate pattern set finding a subset of its instances that is essentially optimal with respect to the cost per uncovered edge;
selecting the most efficient of the optimal instance sets obtained in the previous step;
adding this set of subgraphs to the cover and updating the set of uncovered edges.

11. The method of claim 10, wherein finding the optimal instance set for a given candidate pattern is determined by a heuristic that comprises:

constructing a graph of which the vertices correspond to the subgraph instances of the pattern that contain a maximal number of uncovered edges of which two are connected by an edge whenever they have an uncovered edge in common;
finding a maximum independent vertex set of the intersection graph;
stepwise adding the subgraphs corresponding to elements of the obtained maximum independent vertex set to the optimal instance set provided such elements decrease the cost per uncovered edge.

12. The method of claim 10, wherein an optimal instance set of a given pattern is constructed stepwise by a heuristic that comprises:

removing the covered edges from the graph;
recursively selecting a random instances of the pattern and adding it to the optimal instance set;
removing the edges of the selected instance from the graph until the graph contains no more instances of the pattern.

13. The method of claim 1, further comprising the step of adapting the system, based on the output subgraph cover.

14. The method of claim 1, wherein the system is one of a gene transcription regulatory network, a computer-based social network, an electronic communication network, an ecological food web, a plurality of connected neurons, an electronic circuit or a traffic system.

15. The method of claim 1, wherein the nodes and/or the edge are colored and or wherein the graph contains self and parallel edges.

16. The method of claim 1 further comprising:

determining a role degree sequence for the graph based on the obtained subgraph cover.

17. The method of claim 1 wherein the graph to be analyzed is partitioned representing a community structure.

18. The method of of claim 1 wherein the graph to be analyzed is a subgraph of some larger graph.

19. Computer-implemented method for compressing a graph comprising nodes and edges, the method comprising the steps of

- determining (120) a set of candidate graph patterns,
- determining (130) a subgraph cover of the graph, based on the set of candidate patterns and a cost function that preferably reflects the expected length of the encoding;
- determining a motif set of the subgraph cover;
- storing the subgraph cover and the motif set in a computer-readable medium.

Fig. 1

```
        ┌──────────┐
        │  Begin   │
        └────┬─────┘
             │
             ▼
      ╱────────────╱
     ╱   Obtain   ╱── 110
    ╱   Graph    ╱
   ╱────────────╱
             │
             ▼
      ╱──────────────╱
     ╱    Select     ╱── 120
    ╱   Candidate   ╱
   ╱    Motifs     ╱
  ╱──────────────╱
             │
             ▼
   ┌─┬──────────────┬─┐
   │ │  Determine   │ │── 130
   │ │  Subgraph    │ │
   │ │   Cover      │ │
   └─┴──────────────┴─┘
             │
             ▼
      ╱──────────────╱
     ╱    Output     ╱── 140
    ╱   Subgraph    ╱
   ╱    Cover      ╱
  ╱──────────────╱
             │
             ▼
        ┌──────────┐
        │   End    │
        └──────────┘
```

100

## Fig. 2

```
            ┌─────────────┐
            │    Begin    │
            └──────┬──────┘
                   │
                   ▼
        ┌──────────────────────┐
        │  CoveredEdges = {}    │   ⌐ 210
        │     Cover = {}        │
        │     Motifs = {}       │
        └──────────┬───────────┘
                   │
                   ▼
        ┌─┬──────────────────┬─┐
   ┌───►│ │  Find Motif m,   │ │  ⌐ 220
   │    │ │   Cover C(m)     │ │
   │    └─┴────────┬─────────┴─┘
   │               │
   │               ▼
   │    ┌────────────────────────────┐
   │    │    CoveredEdges ←          │
   │    │  CoveredEdges∪_{i∈C}e(i)   │  ⌐ 230
   │    │    Cover ← Cover ∪ C       │
   │    │  Motifs ← Motifs ∪ {m}     │
   │    └────────────┬───────────────┘
   │                 │
   │                 ▼
   │            ╱─────────────╲
   │           ╱  |CoveredEdges| ╲
   └──────────◄                   ►  ⌐ 240
               ╲    < |E|?      ╱
                ╲─────────────╱
                      │
                      ▼
  200           ┌───────────┐
                │    End    │
                └───────────┘
```

Fig. 3

```
        ( Begin )
            |
            v
    /‾‾‾‾‾‾‾‾‾‾‾‾‾\
    |  For Each    |
    | Candidate Motif: |
    _____/
            |
            v
    |‖  Determine   ‖|
    |‖   Optimal    ‖|  ——— 310
    |‖ Instance Set ‖|
            |
            v
     \  End For  /
            |
            v
    | Select Most Efficient |
    | Motif & Corresponding |  — 320
    |    Instance Set       |
            |
            v
    ( Return Motif      )   ⌐ 330
    ( & Instance Set    )
```

300

## Fig. 4

```
              ┌─────────────┐
              │    Begin    │
              └─────────────┘
                     │
                     ▼
        ┌───────────────────────────┐
        │     n:=0; C(m) = ∅         │ ─── 410
        └───────────────────────────┘
                     │
                     ▼
        ┌───────────────────────────┐
        │   IntersectionGraph(m,n)   │ ─── 420
        └───────────────────────────┘
                     │
                     ▼
        ┌───────────────────────────┐
        │ Maximum Independent Set    │ ─── 430
        └───────────────────────────┘
                     │
                     ▼
        ┌───────────────────────────┐
        │         Select s           │ ─── 440
        └───────────────────────────┘
                     │
                     ▼
```

$$\sigma(m,C(m)) \leq \sigma(m,C(m)\cup\{s\}) \quad\text{--- 450}$$

$$C(m) \leftarrow C(m)\cup\{s\}$$
$$MIS \leftarrow MIS-\{s\} \quad\text{--- 460}$$

$$MIS \neq \emptyset \quad\text{--- 470}$$

$$n:=n+1 \quad\text{--- 480}$$

$$n=e(m)-1? \quad\text{--- 490}$$

```
              ┌─────────────┐
              │  return C(m) │
              └─────────────┘
```

400

Fig. 5

```
        ┌─────────────┐
        │    Begin    │
        └─────────────┘
               │
               ▼
      ┌──────────────────┐
      │  Remove covered  │ ─── 510
      │  edges from G,   │
      │    C(m) = {}     │
      └──────────────────┘
               │
               ▼
      ┌──────────────────┐
      │ s = Subgraph(G,m)│ ─── 520
      └──────────────────┘
               │
               ▼
      ┌──────────────────┐
      │ C(m) = C(m) U {s}│ ─── 530
      │   G = G \ {s}    │
      └──────────────────┘
               │
               ▼
         ╱────────────╲
        ╱  Subgraph(G,m) ╲ ─── 540
        ╲     = 0?      ╱
         ╲────────────╱
               │
               ▼
      ┌──────────────────┐
      │     return       │ ─── 550
      │      C(m)        │
      └──────────────────┘
```

500

## Fig. 6

| Network | N | E | ERI | CoverI |
|---|---|---|---|---|
| S.Cerevisiae | 688 | 1079 | 11024 | 9811 |
| 547 | 23 | 4 | 60 | 8 |
| E.Coli | 423 | 519 | 5124 | 4810 |
| 323 | 9 | 14 | 13 | 5 |

## Fig. 7

| Network | N | E | ERI | CoverI | | | |
|---|---|---|---|---|---|---|---|
| S.Cerevisiae | 688 | 1079 | 11024 | 9309 | | | |
| 59 | 26 | 16 | 23 | 94 | 5 | 61 | 8 |
| E.Coli | 423 | 519 | 5124 | 4637 | | | |
| 130 | 12 | 51 | 13 | 4 | 5 | | |

## Fig. 8

| Network | N | E | ERI | CoverI |
|---|---|---|---|---|
| s420 | 252 | 399 | 3491 | 3404 |
| 220 | 7 | 4 | 13 | 11 |
| s838 | 512 | 819 | 7995 | 7652 |
| 456 | 15 | 8 | 25 | 23 |

## Fig. 9

| Network | N | E | ERI | CoverI | | | | | |
|---|---|---|---|---|---|---|---|---|---|
| AA | 1057 | 2527 | 25844 | 21255 | | | | | |
| 423 | 16 | 6 | 16 | 130 | 147 | 97 | 0 | 0 | |
| AB | 993 | 2368 | 24012 | 19882 | | | | | |
| 408 | 22 | 4 | 23 | 128 | 131 | 82 | 0 | 0 | |
| EC | 2275 | 5763 | 64842 | 52590 | | | | | |
| 935 | 117 | 5 | 40 | 264 | 345 | 202 | 5 | 0 | |
| CE | 1173 | 2864 | 29634 | 24380 | | | | | |
| 478 | 13 | 3 | 31 | 137 | 178 | 100 | 0 | 0 | |
| AG | 1268 | 3011 | 31616 | 25960 | | | | | |
| 509 | 23 | 6 | 26 | 140 | 168 | 120 | 0 | 4 | |
| AP | 490 | 1163 | 10610 | 8856 | | | | | |
| 195 | 11 | 0 | 12 | 55 | 67 | 46 | 0 | 0 | |

## Fig. 10

| Network | N | E | ERI | CoverI | |
|---|---|---|---|---|---|
| Power Grid | 4941 | 6594 | 81084 | 77084 | |
| 4115 | 237 | 114 | 45 | 31 | 12 |
| 10 | 69 | 2 | 16 | 42 | 2 |

Europäisches
Patentamt

European
Patent Office

Office européen
des brevets

# EUROPEAN SEARCH REPORT

Application Number

EP 13 19 1674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAVLAKHA S ET AL: "Graph summarization with bounded error", PROCEEDINGS OF THE 2008 ACM SIGMOD INTERNATIONAL CONFERENCE ON MANAGEMENT OF DATA , SIGMOD '08, 2008, XP055094465, New York, New York, USA DOI: 10.1145/1376616.1376661 ISBN: 978-1-60-558102-6 * sections 1 and 3.1 * | 1-19 | INV. G06F17/10 |
| A | FEDER T ET AL: "Clique partitions, graph compression and speeding-up algorithms", JOURNAL OF COMPUTER AND SYSTEM SCIENCES, vol. 51, no. 2, October 1995 (1995-10), pages 261-272, XP055094467, ISSN: 0022-0000, DOI: 10.1006/jcss.1995.1065 * sections 1 and 3 * | 1-19 | |
| A | NEWBERY F J: "Edge concentration: A method for clustering directed graphs", ACM SIGSOFT SOFTWARE ENGINEERING NOTES, vol. 14, no. 7, 24 October 1989 (1989-10-24), pages 76-85, XP000562224, DOI: 10.1145/73337.73350 * sections 1, 3 * * section 5, paragraph 1 * | 1-19 | TECHNICAL FIELDS SEARCHED (IPC) G06F G06K |
| A | GILBERT A C ET AL: "Compressing Network Graphs", PROCEEDINGS OF THE LINKKDD WORKSHOP AT THE 10TH ACM CONFERENCE ON KDD, August 1994 (1994-08), XP055094462, * sections 1 and 2 * | 1-19 | |

-/--

The present search report has been drawn up for all claims

| Place of search | Date of completion of the search | Examiner |
|---|---|---|
| Berlin | 20 December 2013 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 13 19 1674

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | Cook D J et al: "Substructure discovery using minimum description length and background knowledge", Journal of Artiicial Intelligence Research, 31 January 1994 (1994-01-31), pages 231-255, XP055094459, Retrieved from the Internet: URL:http://arxiv.org/abs/cs/9402102 [retrieved on 2013-12-19] * section 1 * * section 2, paragraphs 1-2 * * section 6 * * section 7, paragraph 1 * ----- | 1-19 | |

TECHNICAL FIELDS
SEARCHED (IPC)

The present search report has been drawn up for all claims

| Place of search | Date of completion of the search | Examiner |
|---|---|---|
| Berlin | 20 December 2013 | Domingo Vecchioni, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040204925 A1, Milo

### Non-patent literature cited in the description

- **LAWRENCE B. HOLDER ; DIANE J. COOK ; SURNJANI DJOKO.** Substructure discovery in the subdue system. *Proceedings of the Workshop on Knowledge Discovery in Databases,* 1994, 169-180
- **NIKHIL S. KETKAR ; LAWRENCE B. HOLDER ; DIANE J. COOK.** Subdue: Compression-based frequent pattern discovery in graph data. In proceedings of the 1st international workshop on open source data mining: frequent pattern mining implementations. *ACM,* 2005, 71-76
- **J. BERG ; M. LÄSSIG.** Local graph alignment and motif search in biological networks. *PNAS,* 2004, vol. 101 (41), 14689-14694
- **B. BOLLOBAS ; S. JANSON ; O. RIORDAN.** Sparse Random Graphs with Clustering. *Random Structures and Algorithms,* 2011, vol. 38, 269-323
- **KARRER ; MEJ NEWMAN.** Random graphs containing arbitrary distributions of subgraphs. *Physical Review,* 2010, vol. E, 82 (6), 066118
- **BRIAN KARRER ; MEJ NEWMAN.** Random graphs containing arbitrary distributions of subgraphs. *Physical Review,* 2010, vol. E, 82 (6), 066118
- **M.E.J. NEWMAN.** Random graphs with clustering. *Physical review letters,* 2009, vol. 103 (5), 58701
- **ULLMANN, J. R.** An algorithm for subgraph isomorphism. *Journal of the ACM,* 1976, vol. 23 (1), 31-42
- **MURRAY GELL-MANN ; SETH LLOYD.** Information measures, effective complexity, and total information. *Complexity,* 1996, vol. 2 (1), 44-52
- **RAVI BOPPANA ; MAGNÚS M. HALLDÓRSSON.** Approximating maximum independent sets by excluding subgraphs. *BIT Numerical Mathematics,* 1992, vol. 32 (2), 180-196
- **S. SHEN-ORR ; R. MILO ; S. MANGAN ; U. ALON.** *Nature Genet,* 2002, vol. 31, 64
- **R. MILO et al.** *Science,* 2002, vol. 298, 824
- **H. JEONG ; B. TOMBOR ; R. ALBERT ; Z. N. OLTVAI ; A.-L. BARABÁSI.** *Nature,* 2000, vol. 407, 651
- **D. J. WATTS ; S. H. STROGATZ.** *Nature,* 1998, vol. 393, 440-442